# EUROPEAN PATENT SPECIFICATION

(11) **EP 4 284 067 B1**
(45) Date of publication and mention of the grant of the patent: **02.07.2025**
(21) Application number: 22851628.2
(22) Date of filing: 27.04.2022
(51) Int. Cl.: H04L 12/28, H04L 41/0806, H04L 41/0853, H04L 41/12, H04W 12/06, H04W 12/55, H04W 76/11, H04L 41/082, H04W 84/12

(54) **NETWORK DISTRIBUTION METHOD AND APPARATUS**
NETZWERKVERTEILUNGSVERFAHREN UND -VORRICHTUNG
PROCÉDÉ ET APPAREIL DE DISTRIBUTION RÉSEAU

(30) Priority: 03.08.2021 CN 202110886501
(43) Date of publication of application: 29.11.2023
(73) Proprietor: Honor Device Co., Ltd., Shenzhen, Guangdong 518040 (CN)
(72) Inventor: YANG, Shuhui, Shenzhen, Guangdong 518040 (CN); YIN, Fei, Shenzhen, Guangdong 518040 (CN)
(74) Representative: Gill Jennings & Every LLP
(86) International application number: PCT/CN2022/089503
(87) International publication number: WO 2023/010907

(56) References cited:
- CN-A- 108 616 882
- CN-A- 108 632 938
- CN-A- 112 312 518
- CN-A- 113 747 543
- CN-B- 105 897 475
- US-A1- 2016 219 469

## Description

This application claims priority to Chinese Patent Application No. 202110886501.4, filed with China National Intellectual Property Administration on August 03, 2021 and entitled "NETWORK CONFIGURATION METHOD AND APPARATUS".

### TECHNICAL FIELD

This application relates to the field of communication network technologies, and in particular, to a network configuration method and apparatus.

### BACKGROUND

Smart home devices have become a part of people's daily life. A user may install an application (Application, APP) related to smart home on an electronic device and remotely control a smart home device by operating the APP on the electronic device. For example, a smart home APP is installed on an electronic device, a smart home device is added by using the smart home APP, and the smart home device is remotely controlled in the smart home APP.

During addition of the smart home device, network configuration is first performed on the smart home device. Network configuration means sending a service set identifier (Service Set Identifier, SSID) and a password of a router to the smart home device in a certain way, and the smart home device receives the SSID and the password to connect to the router to complete the network configuration. Most smart home devices support a 2.4G Wireless Fidelity (Wireless Fidelity, Wi-Fi) network. If the electronic device is connected to a 5G Wi-Fi network, the user needs to reselect a nearby available 2.4G Wi-Fi network, or the user needs to switch the electronic device from the network to which the electronic device is connected to a 2.4G Wi-Fi network. This increases user operations.

US 2016/0219469 A1 discloses the selection of a wireless network for use by a target computing device. Examples include a determination that a client computing device is connected to a first wireless network of a first frequency band and having a first service set identifier (SSD). Examples further include selection of a second wireless network of a second frequency band for use by the target computing device without user intervention, the second wireless network having an SSD including at least a base substring of the first SSD.

CN 105 897 475 B discloses a remote configuration method.

### SUMMARY

A network configuration method and apparatus provided in this application resolve a problem of increased user operations during network configuration of smart home devices.

To achieve the foregoing objective, the invention is as defined in the claims. The following aspects are provided for illustrative purposes.

According to a first aspect, this application provides a network configuration method applicable to a first electronic device. The first electronic device is connected to a 5G wireless network of a router, and the method includes: discovering a second electronic device by scanning, where the second electronic device supports a 2.4G wireless network; and sending, to the second electronic device, a service set identifier and a password of a wireless network to which the first electronic device is currently connected if service set identifiers and passwords of the 5G wireless network and a 2.4G wireless network of the router are the same.

In this embodiment, the first electronic device discovers the second electronic device by scanning. Although the 5G wireless network to which the first electronic device is currently connected is different from the 2.4G wireless network supported by the second electronic device, since the service set identifiers and the passwords of the 5G wireless network and the 2.4G wireless network of the router are the same, the first electronic device may directly send the service set identifier and the password of the wireless network to which the first electronic device is currently connected (for example, the 5G wireless network) to the second electronic device. In this way, a user does not need to manually switch to the 2.4G wireless network of the router, improving access efficiency of the second electronic device and reducing user operations.

Optionally, the sending, to the second electronic device, a service set identifier and a password of a wireless network to which the first electronic device is currently connected if service set identifiers and passwords of the 5G wireless network and the 2.4G wireless network of the router are the same includes: obtaining a device configuration file of the router; and sending, to the second electronic device, the service set identifier and the password of the wireless network to which the first electronic device is currently connected if a field value corresponding to a first function is extracted from the device configuration file of the router, where the first function represents that the service set identifiers and the passwords of the 5G wireless network and the 2.4G wireless network of the router are the same, and the first electronic device is allowed to be connected to the 5G wireless network or the 2.4G wireless network when the first function is enabled.

In this embodiment, various data of the router is recorded in the device configuration file of the router. For example, whether the router has the first function is recorded in the device configuration file of the router. If the router has the first function, it indicates that the service set identifiers and the passwords of the 5G wireless network and the 2.4G wireless network of the router are the same. In addition, when the first function is enabled, the first electronic device may be connected to the 5G wireless network or the 2.4G wireless network. For example, the first electronic device may be connected to a preferential wireless network. If the router has the first function, a field may be used in the device configuration file of the router to indicate that the router has the first function. Therefore, through determination of whether the field value corresponding to the first function may be extracted from the device configuration file of the router, it may be determined whether the service set identifiers and the passwords of the 5G wireless network and the 2.4G wireless network of the router are the same. The determination manner is simple and easy. The first function may be a dual frequency optimization function or a dual frequency integration function.

Optionally, when the field value corresponding to the first function is a target value, it is determined that the router enables the first function. If the router enables the first function, it indicates that the router has enabled the function that the service set identifiers and the passwords of the 5G wireless network and the 2.4G wireless network are the same. When the first electronic device discovers the second electronic device by scanning, the service set identifier and the password of the wireless network to which the first electronic device is currently connected to may be directly sent to the second electronic device. For example, the field value corresponding to the first function may be 0 or 1. If the extracted field value corresponding to the first function is 1 (a target value), it is determined that the router enables the first function.

Optionally, the method further includes: controlling the router to enable the first function if the router does not enable the first function. In a scenario in which the router supports the function in which the service set identifiers and the passwords of the 5G wireless network and the 2.4G wireless network of the router are the same, and the router does not enable such function, service set identifiers and passwords of a 5G wireless network and a 2.4G wireless network provided by the router may be different. In this scenario, the first electronic device may control the router to enable the first function, so as to control the router to enable the function that the service set identifiers and the passwords of the 5G wireless network and the 2.4G wireless network. Then the first electronic device may send, to the second electronic device discovered by scanning, the service set identifier and the password of the wireless network to which the first electronic device is currently connected. In this way, the user does not need to manually switch to the 2.4G wireless network of the router, improving the access efficiency of the second electronic device and reducing user operations.

Optionally, the method further includes: sending, to the second electronic device, a service set identifier and a password of a wireless network to which the first electronic device was connected if the service set identifiers and the passwords of the 5G wireless network and the 2.4G wireless network of the router are different; or sending, to the second electronic device, a service set identifier and a password of an available wireless network near the first electronic device if the service set identifiers and the passwords of the 5G wireless network and the 2.4G wireless network of the router are different.

In this embodiment, if the service set identifiers and the passwords of the 5G wireless network and the 2.4G wireless network of the router are different, the first electronic device may send a service set identifier and a password of another wireless network to the second electronic device, for example, the service set identifier and the password of the wireless network to which the first electronic device was connected, or the service set identifier and the password of the available wireless network near the first electronic device. The second electronic device attempts to connect to the network by using the service set identifiers and the passwords. If the second electronic device successfully connects to the network, the user operations may be reduced. However, a duration for connecting to the network is increased, which reduces the access efficiency of the second electronic device.

Optionally, the method further includes: obtaining network configuration data of the router set by a user, where the network configuration data of the router includes at least the service set identifiers and the passwords of the 5G wireless network and the 2.4G wireless network of the router being the same; and writing the network configuration data of the router into the device configuration file of the router. In this embodiment, a user may configure the router, for example, configure the service set identifiers and the passwords of the 5G wireless network and the 2.4G wireless network of the router to be the same. The function of the router is recorded in the device configuration file of the router. For example, the user may configure the router in such a way that the router has the first function and the first function is to be enabled by the user. The configuration is recorded in the device configuration file of the router for use when the first electronic device discovers the second electronic device by scanning.

Optionally, the method further includes: synchronously updating the device configuration file of the router in a server, to implement consistency in device configuration files of the router stored in different devices.

Optionally, the synchronously updating the device configuration file of the router in a server includes: sending, to the server, the device configuration file of the router into which the network configuration data is written; or sending a device configuration file updating instruction to the server, where the device configuration file updating instruction carries the network configuration data, and writing, by the server, the network configuration data into the device configuration file of the router stored in the server. In this embodiment, the first electronic device may select at least one manner to synchronously update the device configuration file of the router in the server, which provides a plurality of synchronization manners are provided.

According to a second aspect, this application provides a network configuration method applicable to a first electronic device. The first electronic device is connected to a 5G wireless network of a router, and the method includes: discovering a second electronic device by scanning, where the second electronic device supports a 2.4G wireless network; and sending a service set identifier and a password of a wireless network to the second electronic device. The second electronic device attempts to connect to the network by using the service set identifiers and the passwords. If the second electronic device successfully connects to the network, the user operations may be reduced. However, a duration for connecting to the network is increased, which reduces the access efficiency of the second electronic device.

Optionally, the sending a service set identifier and a password of a wireless network to the second electronic device includes: sending, to the second electronic device, a service set identifier and a password of a wireless network provided by the router; or sending, to the second electronic device, a service set identifier and a password of a wireless network to which the first electronic device was connected; or sending, to the second electronic device, a service set identifier and a password of an available wireless network near the first electronic device.

In this embodiment, the first electronic device may send service set identifiers and passwords of different wireless networks to the second electronic device, and the second electronic device may attempt to connect to the network by using the various service set identifiers and passwords to increase a probability of successfully connecting to the network.

Optionally, the method further includes: prompting to change the network connection of the first electronic device in response to a network configuration failure indication if the second electronic device supports the 2.4G wireless network and the first electronic device is not connected to the 2.4G wireless network; and outputting a network configuration failure reason if the second electronic device supports the 2.4G wireless network and the 5G wireless network or if the second electronic device supports the 2.4G wireless network and the first electronic device is connected to the 2.4G wireless network. In this embodiment, the first electronic device may output different information based on a network support status of the second electronic device and a network connecting status of the first electronic device, to realize targeted processing based on different information.

According to a third aspect, this application provides an electronic device. The electronic device includes one or more processors and a memory. The memory is configured to store one or more computer program codes. The one or more computer program codes include computer instructions. When the one or more processors execute the computer instructions, the electronic device performs the foregoing network configuration method.

According to a fourth aspect, this application provides a network configuration apparatus, which includes a processing unit and a storage unit. The storage unit is configured to store one or more programs. The processing unit is configured to execute the one or more programs. The one or more programs include instructions, and the instructions are used to perform the foregoing network configuration method. The processing unit and storage unit may be two functional units in a processor of an electronic device. The storage unit in the processor stores instructions of one or more programs, and then the processing unit in the processor runs the instructions to perform the foregoing network configuration method.

According to a fifth aspect, this application provides a computer storage medium. The computer storage medium includes computer instructions. When the computer instructions are run on an electronic device, the electronic device is caused to perform the foregoing network configuration method.

It should be understood that descriptions of technical features, technical solutions, beneficial effects, or similar languages in this application do not imply that all features and advantages can be achieved in any single embodiment. On the contrary, it may be understood that descriptions of features or beneficial effects mean that a particular technical feature, technical solution, or beneficial effect is included in at least one embodiment. Therefore, descriptions of the technical features, technical solutions, or beneficial effects in this specification do not necessarily refer to a same embodiment. Further, the technical features, technical solutions, and beneficial effects described in the embodiments may be combined in any suitable manner. A person skilled in the art understands that the embodiments may be implemented without one or more particular technical features, technical solutions, or beneficial effects of a particular embodiment. In other embodiments, additional technical features and beneficial effects may be further identified in a particular embodiment that does not embody all embodiments.

### BRIEF DESCRIPTION OF DRAWINGS

FIG. 1 is an example composition diagram of a smart home system according to this application;
FIG. 2 is an example composition diagram of an electronic device according to this application;
FIG. 3 is a schematic diagram I of network configuration according to this application;
FIG. 4 is an example flowchart I of a network configuration method according to this application;
FIG. 5 is a schematic diagram I of networking between devices according to this application;
FIG. 6 is a schematic signaling diagram of router configuration according to this application;
FIG. 7 is a schematic diagram II of networking between devices according to this application;
FIG. 8 is a schematic signaling diagram of network configuration of a smart home device according to this application
FIG. 9 is an example flowchart II of a network configuration method according to this application;
FIG. 10 a schematic diagram III of networking between devices according to this application;
FIG. 11 is an example flowchart III of a network configuration method according to this application;
FIG. 12 is schematic diagram IV of networking between devices according to this application; and
FIG. 13A and FIG. 13B are example flowcharts IV of a network configuration method according to this application.

### DESCRIPTION OF EMBODIMENTS

In the specification, claims, and accompanying drawings of this application, terms "first", "second", "third", and the like are intended to distinguish between different objects but do not define a particular order.

In embodiments of this application, a word such as "in an example" or "for example" is used to represent giving an example, an illustration, or a description. Any embodiment or design scheme described as "in an example" or "for example" in embodiments of this application is not explained as being preferential or having more advantages than another embodiment or design scheme. Exactly, use of the word such as "in an example" or "for example" is intended to present a concept in a specific manner.

For clarity and brevity of the following embodiments, the related art is briefly described first.

Smart home (smart home or home automation) is a residential platform that integrates facilities related to home life by using a comprehensive wiring technology, a network communication technology, security protection technology, an automatic control technology, and an audio and video technology, to build an efficient management system for residential facilities and daily family affairs. Smart home improves home security, convenience, comfort, and artistry, and achieves an environmentally friendly and energy-saving living environment.

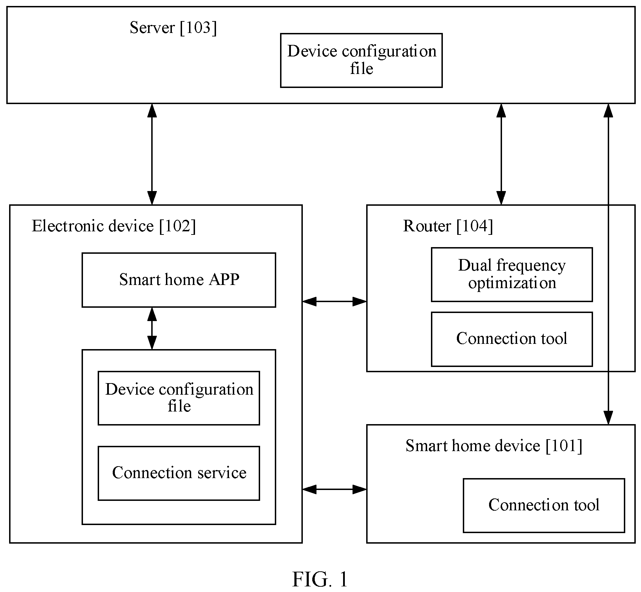

FIG. 1 is an example diagram of a smart home system according to an embodiment of this application. The smart home system includes a smart home device 101, an electronic device 102, and a server 103. The smart home device 101 and the electronic device 102 may be wirelessly connected to the server 103. For example, the smart home device 101 and the electronic device 102 may be connected to the server 103 through a router 104 shown in FIG. 1 for communication. It may be understood that the smart home device 101 and the electronic device 102 have already been registered on the server 103, and the smart home device 101 is associated with the electronic device 102. In other words, the smart home device 101 has successfully paired with the electronic device 102, and a user may control the smart home device 101 through the electronic device 102. For example, a smart home APP is installed in the electronic device 102. The smart home APP is a visualization platform for the user to manage the smart home device 101. An identifier of the smart home device 101 and an operation performed on the smart home device 101 may be displayed on the smart home APP. For example, the electronic device 102 may perform network configuration on the smart home device 101.

An operating system of the electronic device is pre-configured with a connection service (LinkService). The LinkService is an underlying service for device connection, device interaction, and the like. For example, the electronic device connects to at least one of the smart home device 101, the router 104, and the server 103 through the LinkService. After the electronic device 102 connects to the server 103, the electronic device may interact with the server 103 through the LinkService. For example, the electronic device 102 stores device information in a device configuration file (DeviceProfile) and synchronizes the DeviceProfile to the server 103. The device information may be information about at least one type of device of the smart home device 101 and the router 103. Likewise, the electronic device 101 may interact with the smart home device 101 through the LinkService. For example, the electronic device uses the LinkService to control the smart home device 101 through the smart home APP.

A connection tool (LinkSDK) may be integrated in the smart home device 101 and the router 104. The LinkSDK is used for connection to the electronic device 102 and interaction with the server 103.

The server 103 may be configured to store status information of the smart home device 101. For example, the server 103 may store latest status information of the smart home device 101. In another example, the server 103 may store the status information of the smart home device 101 in different time periods. This is not limited. In addition, the server 103 may be a cloud server. In some examples, the server 103 may store the device configuration file. The device configuration file stores device information. For example, the device configuration file stores configuration information of the router.

Major device manufacturers and developers may write device configuration files into the server 103. However, field values of some fields in the device configuration files written by the major device manufacturers and developers into the server 103 may be empty or configured with a default value. For example, the user may write the device configuration file of the router into the server 103. In the device configuration file, a field value of a "dual frequency optimization" field is empty or configured with a default value such as 0. 0 indicates that a dual frequency optimization function of the router is disabled, and 1 indicates that the dual frequency optimization function of the router is enabled. The dual frequency optimization function means that SSIDs and passwords of a 5G Wi-Fi network and a 2.4G Wi-Fi network of the router are the same. If the router enables the dual frequency optimization function, the electronic device selects a frequency band from the two wireless networks based on a distance to the router, for example, selects a frequency band from 2.4G and 5G. The electronic device automatically selects a faster frequency band under the same signal strength. The device configuration file in the server 103 may be shared to the electronic device 102. The user may rewrite the device configuration file on the electronic device 102 and synchronize the rewritten device configuration file to the server 103. For example, the user may rewrite the field value of the "dual frequency optimization" field in the device configuration file of the router, for example, rewrite the field value of the "dual frequency optimization" field to 1. In some routers, dual frequency optimization is referred to as dual frequency integration. The dual frequency integration function is the same as the dual frequency optimization function.

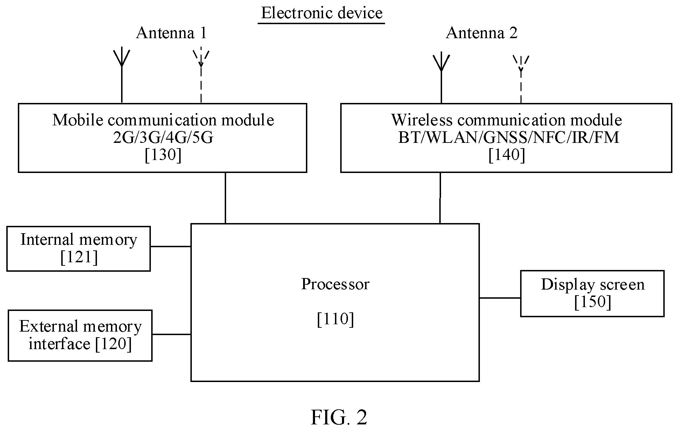

In some embodiments, the electronic device 102 may be a mobile phone, a tablet computer, a desktop computer, a laptop computer, a notebook computer, an ultra mobile personal computer (Ultra-mobile Personal Computer, UMPC), a handheld computer, a netbook, a personal digital assistant (Personal Digital Assistant, PDA), a wearable electronic device, a smart watch, or the like. Specific forms of the smart home device, the server, and the electronic device are not specially limited in this application. In this embodiment, a structure of the electronic device 102 may be shown in FIG. 2, which is a schematic structural diagram of the electronic device 102 in the smart home system shown in FIG. 1 according to an embodiment of this application.

The electronic device may include a processor 110, an external memory interface 120, an internal memory 121, an antenna 1, an antenna 2, a mobile communication module 130, a wireless communication module 140, a display screen 150, and the like. It may be understood that the schematic structure in this embodiment constitutes no specific limitation on the electronic device. In some other embodiments, the electronic device may include more or fewer components than those shown in the figure, or some components may be combined, or some components may be split, or a different component arrangement may be used. The illustrated components may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be separate devices, or may be integrated into one or more processors. For example, in this application, the processor 110 may control the display screen 105 to display an interface of the smart home APP, and the user may set the configuration information of the router and the like in the interface of the smart home APP.

A memory may be further disposed in the processor 110, and is configured to store instructions and data. In some embodiments, the memory in the processor 110 is a cache. The memory may store instructions or data recently used or repeatedly used by the processor 110. For example, the memory stores the device configuration file of the router. If the processor 110 needs to use the instructions or the data again, the processor may directly call the instructions or the data from the memory. This avoids repeated access, and reduces a waiting time for the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a universal serial bus (universal serial bus, USB) interface, and the like. The processor 110 may be coupled to other devices through one or more interfaces. For example, the processor may be coupled to an audio device through the I2C interface.

A wireless communication function of the electronic device may be implemented through the antenna 1, the antenna 2, the mobile communication module 130, the wireless communication module 140, the modem processor, the baseband processor, and the like.

The antenna 1 and the antenna 2 are configured to transmit or receive an electromagnetic wave signal. Each antenna in the electronic device may be configured to cover one or more communication bands. Different antennas may be multiplexed to increase an antenna utilization. For example, the antenna 1 may be multiplexed into a diversity antenna of a wireless local area network. In some other embodiments, the antenna may be used together with a tuning switch.

The mobile communication module 130 may provide a wireless communication solution including 2G/3G/4G/5G and the like applicable to the electronic device. The mobile communication module 130 may include at least one filter, a switch, a power amplifier, a low noise amplifier (low noise amplifier, LNA), and the like. The mobile communication module 130 may receive an electromagnetic wave through the antenna 1, perform processing such as filtering and amplification on the received electromagnetic wave, and transmit a processed electromagnetic wave to the modem processor for demodulation. The mobile communication module 130 may further amplify a signal modulated by the modem processor, and convert the signal into an electromagnetic wave for radiation through the antenna 1. In some embodiments, at least some function modules of the mobile communication module 130 may be disposed in the processor 110. In some embodiments, at least some function modules of the mobile communication module 130 and at least some modules of the processor 110 may be disposed in a same device.

The modem processor may include a modulator and a demodulator. The modulator is configured to modulate a to-be-transmitted low frequency baseband signal into a medium-high frequency signal. The demodulator is configured to demodulate a received electromagnetic wave signal into a low-frequency baseband signal. Then the demodulator transmits the demodulated low-frequency baseband signal to the baseband processor for processing. The low-frequency baseband signal is processed by the baseband processor and then transmitted to the application processor. The application processor outputs a sound signal through the audio device, or displays an image or a video through the display screen 150. In some embodiments, the modem processor may be an independent device. In some other embodiments, the modem processor may be independent of the processor 110, and may be disposed in a same device as the mobile communication module 130 or another functional module.

The wireless communications module 140 may provide a wireless communication solution applicable to the electronic device, for example, a wireless local area network (wireless local area networks, WLAN) (for example, a Wi-Fi network), Bluetooth (bluetooth, BT), a global navigation satellite system (global navigation satellite system, GNSS), frequency modulation (frequency modulation, FM), a near field communication (near field communication, NFC) technology, and an infrared (infrared, IR) technology. The wireless communication module 140 may be one or more devices in which at least one communication processing module is integrated. The wireless communication module 140 receives an electromagnetic wave through the antenna 2, performs frequency modulation and filtering on the electromagnetic wave signal, and transmits a processed signal to the processor 110. The wireless communication module 140 may further receive a to-be-transmitted signal from the processor 110, perform frequency modulation and amplification on the to-be-transmitted signal, and convert the to-be-transmitted signal into an electromagnetic wave by using the antenna 2 for radiation.

In some embodiments, in the electronic device, the antenna 1 is coupled to the mobile communication module 130, and the antenna 2 is coupled to the wireless communication module 140, so that the electronic device can communicate with a network and another device by using a wireless communication technology. The wireless communications technology may specifically include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), and a Beidou navigation satellite system (beidou navigation satellite system, BDS), a quasi-zenith satellite system (quasi-zenith satellite system, QZSS), and/or a satellite based augmentation system (satellite based augmentation systems, SBAS).

The electronic device implements a display function through the GPU, the display screen 150, the application processor, and the like. The GPU is an image processing microprocessor, and is connected to the display screen 150 and the application processor. The GPU is configured to perform mathematical and geometric calculations and graphics rendering. The processor 110 may include one or more GPUs and execute program instructions to generate or change display information.

The display screen 150 is configured to display an image, a video, a page, and the like. The display screen 150 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a MiniLED, a MicroLED, a Micro-OLED, a quantum dot light emitting diode (quantum dot light emitting diodes, QLED), or the like. In some embodiments, the electronic device may include 1 or N display screens 150. N is a positive integer greater than 1.

The display screen 150 of the electronic device may display a series of graphical user interfaces (graphical user interface, GUI). The GUIs are all home screens of the electronic device. Generally, a size of the display screen 150 of the electronic device is fixed, and only a limited number of controls may be displayed in the display screen 150 of the electronic device. A control is a GUI element, which is a software component included in an application, and controls all data processed by the application and interactive operations regarding all the data. A user may interact with the control through direct manipulation (direct manipulation), so as to read or edit related information of the application. In general, the control may include visual interface elements such as an icon, a button, a menu, a tab, a text box, a dialog box, a status bar, a navigation bar, and a widget.

The external memory interface 120 may be configured to connect to an external storage card such as a micro SD card, to increase a storage capacity of the electronic device. The external storage card communicates with the processor 110 through the external memory interface 120, to implement a data storage function. For example, files such as music and videos are stored in the external storage card.

The internal memory 121 may be configured to store computer-executable program code, and the executable program code includes instructions. The processor 110 executes various function applications and data processing of the electronic device by running the instructions stored in the internal memory 121. For example, in this embodiment, the processor 110 may rewrite the device configuration file by executing instructions stored in internal memory 121, and so on. The internal memory 121 may include a program storage area and a data storage area. The program storage area may store an operating system, an application required for at least one function (such as a sound playback function and an image display function), and the like. The storage data area may store data created during use of the electronic device (such as the device configuration file). In addition, the internal memory 121 may include a high-speed random access memory, and may further include a non-volatile memory, for example, at least one disk storage device, a flash memory device, or a universal flash storage (universal flash storage, UFS). The processor 110 executes various functional applications and data processing of the electronic device by running the instructions stored in the internal memory 121 and/or stored in a memory disposed in the processor.

In addition, an operating system, such as the iOS operating system developed by Apple, the Android open-source operating system developed by Google, the Harmony operating system (HarmonyOS) developed by Huawei, or the Windows operating system developed by Microsoft runs on the foregoing components. An application may be installed and run on the operating system.

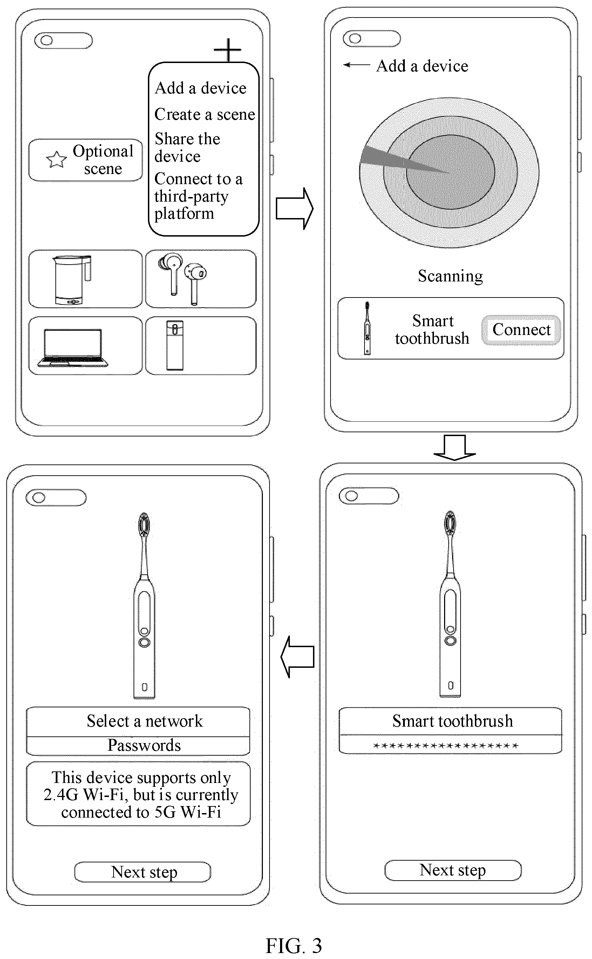

The smart home device 101 controlled by the electronic device 102 may be added through the smart home APP, to perform network configuration on the smart home device 101. As shown in FIG. 3, the electronic device 102 runs the smart home APP and displays a home screen of the smart home APP on the display screen. A user triggers (for example, taps) an "add device" option in the home screen of the smart home APP. In response to the add device instruction, the electronic device 102 switches from the home display screen to a display device scanning interface, and enables a scanning function to scan the smart home device 101 near the electronic device 102 in a discoverable mode (a softAP mode).

For example, the electronic device 102 discovers a smart toothbrush by scanning. The electronic device may perform network configuration on the smart toothbrush. For example, the user may trigger a "connect" option. In this case, the electronic device performs network connection detection to determine whether the electronic device is currently connected to a network supported by the smart toothbrush. If the electronic device is currently connected to the network supported by the intelligent toothbrush, the electronic device sends, to the smart toothbrush, an SSID and a password of the network to which currently connected. The smart toothbrush connects to the network by using the SSID and the password. If the electronic device is currently connected to a network not supported by the smart toothbrush, the electronic device displays prompt information, and then the user switches the electronic device to be connected to a network to which the smart toothbrush is connected.

For example, if a smart toothbrush supports a wireless network at only one frequency band, for example, supports only a 2.4G Wi-Fi network, but the electronic device is currently connected to a 5G Wi-Fi network, the electronic device displays "This device supports only 2.4G Wi-Fi, but is currently connected to 5G Wi-Fi". The user may select an available 2.4G Wi-Fi network for the electronic device, or may disable the dual frequency optimization function of the router and manually connect the electronic device to the 2.4G Wi-Fi network of the router.

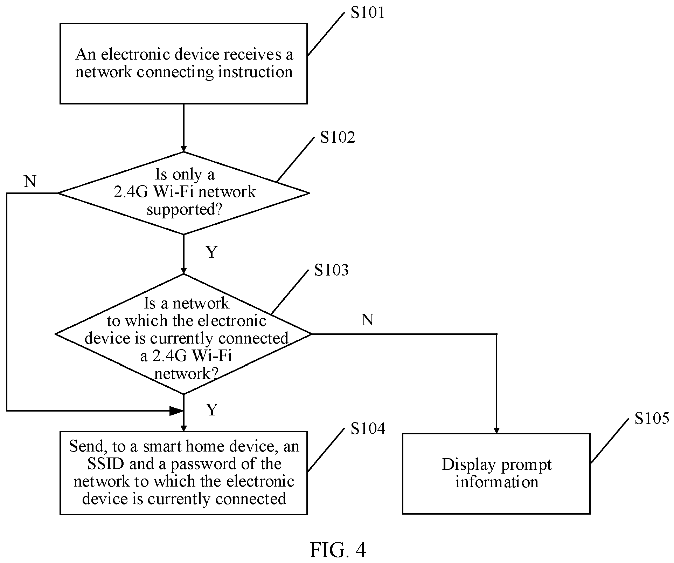

Correspondingly, a process in which the electronic device performs network configuration on the smart home device is shown in FIG. 4. The process may include the following steps.

S101: The electronic device receives a network connecting instruction. After the smart home APP discovers the smart home device through scanning, the discovered smart home device is displayed on the smart home APP and a "connect" button is also displayed, as shown in FIG. 3. The user taps the "connect" button to trigger a network connecting instruction bound to the "connect" button, so as to instruct the electronic device to perform network configuration on the smart home device.

S102: The electronic device determines, in response to the network connecting instruction, whether the smart home device supports only the 2.4G Wi-Fi network. If so, step S103 is performed. If not, step S104 is performed.

S103: The electronic device determines whether a network to which the electronic device is currently connected is a 2.4G Wi-Fi network. If so, step S104 is performed. If not, step S105 is performed. The electronic device is connected to the router, and the network to which the electronic device is currently connected is a network to which the router is connected to. In step S103, it is determined whether the network to which the router is connected is a 2.4G Wi-Fi network, to determine whether the network to which the electronic device is currently connected to is a network supported by the smart home device.

S104: The electronic device sends, to the smart home device, an SSID and a password of the network to which the electronic device is currently connected. After receiving the SSID and the password, the smart home device registers with the configured network.

S105: The electronic device displays prompt information. For example, "this device supports only 2.4G Wi-Fi, but is now being currently connected to 5G Wi-Fi".

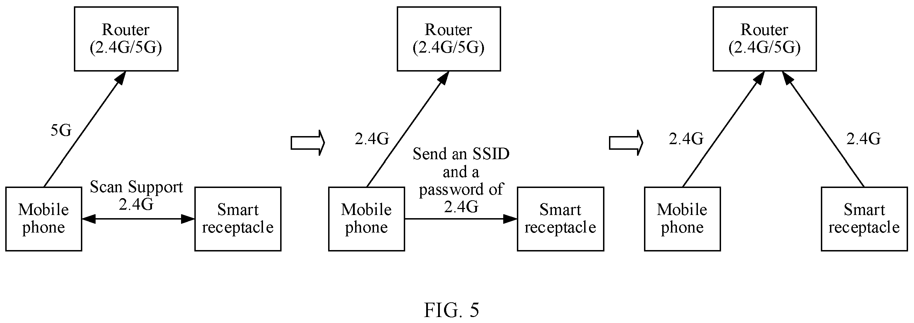

After the user sees the prompt information, the user may select an available 2.4G Wi-Fi network for the electronic device, or the user may disable the dual frequency optimization function of the router and manually connect the electronic device to the 2.4G Wi-Fi network of the router. After the electronic device is manually connected to the 2.4G Wi-Fi network, an SSID and a password of the 2.4G Wi-Fi network may be sent to the smart home device. The smart home device registers with the configured network by using the SSID and the password of the 2.4G Wi-Fi network. This process requires manual operations of the user, which increases user operations. FIG. 5 is a schematic diagram I of networking between devices. In FIG. 5, the electronic device may be a mobile phone, the smart home device may be a smart receptacle, and the router may provide a 2.4G Wi-Fi network and a 5G Wi-Fi network. The mobile phone is connected to the 5G Wi-Fi network provided by the router. The smart home APP discovers a smart receptacle by scanning and determines that the smart receptacle supports only a 2.4G Wi-Fi network. In order to complete network configuration of the smart receptacle, the user manually switches the network provided by the router from the 5G Wi-Fi network to the 2.4G Wi-Fi network. Then the mobile phone sends an SSID and a password of the 2.4G Wi-Fi network to the smart receptacle. The smart receptacle connects to the 2.4G Wi-Fi network by using the SSID and the password of the 2.4G Wi-Fi network, and the mobile phone is also connected to the 2.4G Wi-Fi network.

In order to reduce user operations, this embodiment provides a device configuration file of the router. Configuration information of the router is recorded in the device configuration file of the router. For example, at least network configuration data of the router is recorded. For example, at least whether the router enables the dual frequency optimization function and the SSID and the password of the network provided by the router are recorded. When the router enables the dual frequency optimization function, SSIDs and passwords of the 5G Wi-Fi network and the 2.4G Wi-Fi network are the same. Regardless of whether the electronic device is currently connected to a network supported by the smart home device, the electronic device may directly send the SSID and the password to the smart home device.

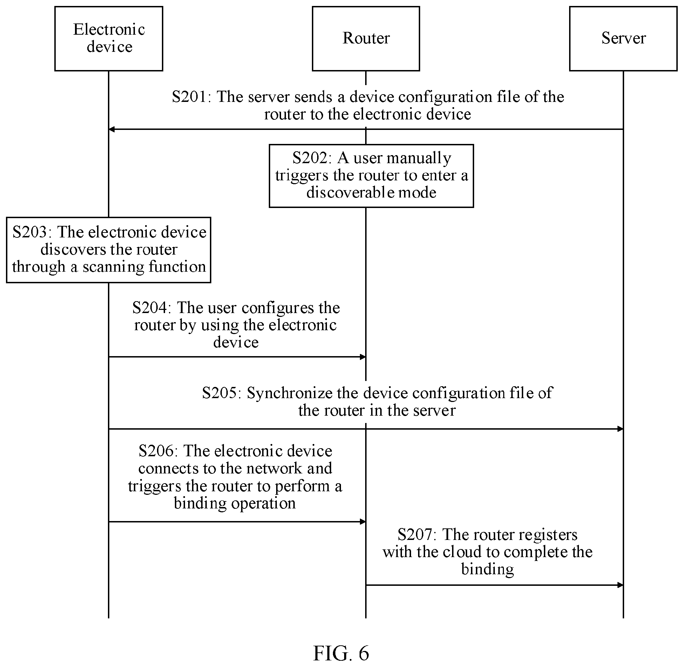

The electronic device configures the router to obtain a schematic signaling diagram of the device configuration file of the router. As shown in FIG. 6, the process may include the following steps.

S201: The server sends a device configuration file of the router to the electronic device. A field value of a dual frequency optimization field in the device configuration file sent by the server may be empty, or the field value of the dual frequency optimization field may be a default value. For example, the field value of the dual frequency optimization field is 0. Field values of an SSID and a password in the device configuration file sent by the server are empty.

The server sends the device configuration file to electronic device to obtain identification information of the router, for example, obtain a model and a name of the router. After discovering the router by scanning, the electronic device determines, by using the identification information of the router obtained from the device configuration file, whether the scanned router is a router that needs to be configured by the electronic device. If so, the electronic device may configure the router.

In terms of the use of the device configuration file, in an example, an alternative to step S201 is that the server sends the identification information of the router to the electronic device. In another example, another alternative to step S201 is that the router sends the device configuration file to the electronic device. A wired connection is established between the router and the electronic device. For example, the router connects to the electronic device through a network cable. Correspondingly, the electronic device needs to be provided with a wired interface therein. The electronic device may originally have a wired interface, or the electronic device may be configured with a wired interface through an extended interface. Likewise, the router may send the identification information of the router to the electronic device.

In other words, in step S201, the identification information of the router is sent to the electronic device. The device configuration file of the router may be shared, and the electronic device obtains the identification information of the router from the device configuration file. The share may be that the server or the router sends the device configuration file of the router to the electronic device. Alternatively, identification information of the router may be shared. For example, the server or the router sends the identification information of the router to the electronic device.

S202: The user manually triggers the router to enter a discoverable mode (a SoftAP mode). When the router enters the softAP mode, the router is in a to-be-configured state. For example, whether the router enables the "dual frequency optimization" and the SSID and the password of the network provided by the router are to be configured. The user may manually operate the router into the softAP mode when the router is powered on for the first time or reset. For example, the user may press and hold a reset button of the router to cause the router to enter the softAP mode.

S203: The electronic device discovers the router through a scanning function. For example, the electronic device may enable the scanning function of the electronic device through the "add device" option in the smart home APP, so that a device near the electronic device in the discoverable mode may be discovered by scanning. For example, the electronic device discovers a router by scanning, and identification information of the scanned router is consistent with the identification information obtained in step S201.

S204: The user configures the router by using the electronic device. The user may set network configuration data of the router on the electronic device, and then control the router to restart to configure the router by using the network configuration data. The user may configure, on the electronic device, the SSID and the password of the network provided by the router, determine whether to enable dual frequency optimization, and so on.

In this embodiment, a configuration file is stored in the router. In an example, a format of the configuration file may be the same as that of the device configuration file. Correspondingly, the electronic device may send the device configuration file to the router, and the router performs file replacement. Alternatively, the electronic device sends a configuration instruction to the router, where the configuration instruction carries the network configuration data, and the router writes the network configuration data into the configuration file. In another example, the format of the configuration file is different from that of the device configuration file, but both the configuration file and the device configuration file have fields such as a password, an SSID, and dual frequency optimization. Correspondingly, the electronic device may send the device configuration file to the router. The router performs format conversion and extracts the network configuration data and writes the network configuration data into the configuration file. Alternatively, the electronic device sends a configuration instruction to the router, where the configuration instruction carries the network configuration data. The router writes the network configuration data into the configuration file. In this way, the network configuration data of the router changes with the configuration of the router, thereby ensuring consistency of the network configuration data of the router in different files/devices.

S205: Synchronize the device configuration file of the router in the server. In an example, the electronic device or the router sends the network configuration data of the router to the server, and the server writes the network configuration data into the device configuration file. The formats of the network configuration data sent by the electronic device and the router may be the same or different. In another example, the electronic device returns the device configuration file of the router to the server. The returned device configuration file is written with the network configuration data of the router. In still another example, a configuration file is stored in the router. After the router writes the network configuration data into the configuration file, the router sends the configuration file to the server. The configuration file may be foregoing device configuration file. The server may perform file replacement after receiving the device configuration file. The configuration file may alternatively be a different file from the device configuration file, but both have fields such as a password, an SSID, and dual frequency optimization. In this case, the server performs format conversion and then extracts the network configuration data and writes the network configuration data into the device configuration file. Through the synchronization of the device configuration file, the consistency of the network configuration data of the router in different files/devices is ensured.

An example device configuration file of the router is as follows:

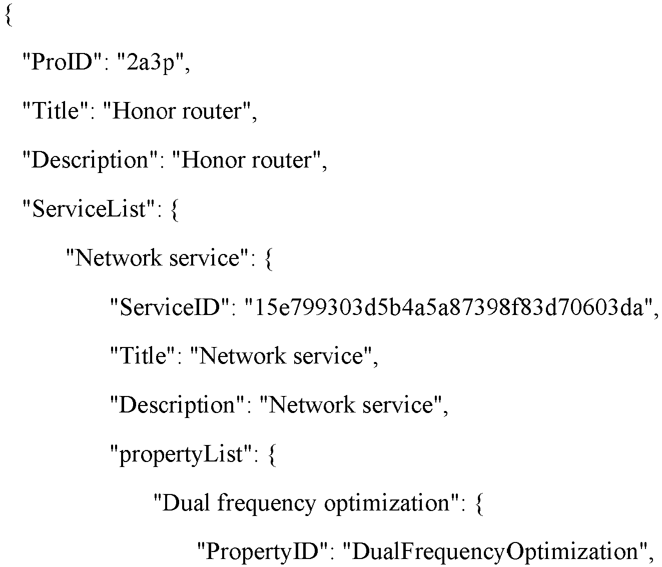

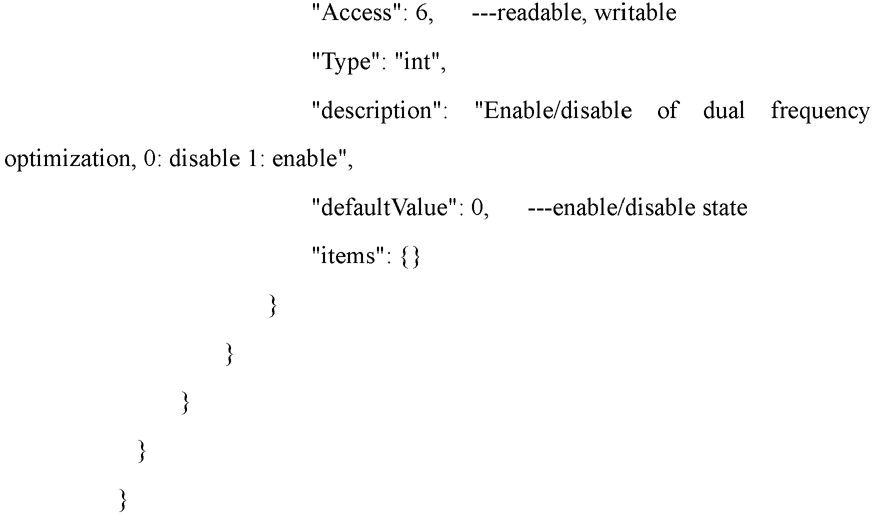

defaultValue is a field value of the dual frequency optimization field description. In this embodiment, the user may adjust the field value of the field by using the electronic device. For example, if the user selects to enable dual frequency optimization of the router, defaultValue becomes 1. If the user selects to disable dual frequency optimization of the router, defaultValue remains at the default value of 0.

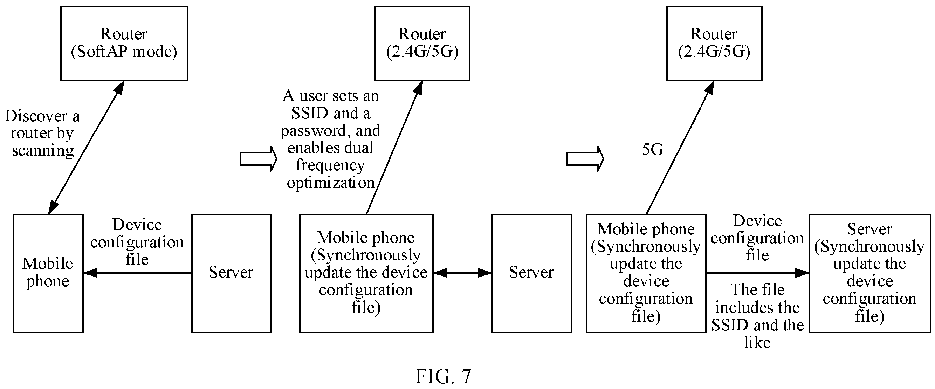

FIG. 7 is a schematic diagram II of networking between devices. In FIG. 7, the mobile phone may obtain the device configuration file of the router from the server, and the user manually adjusts the router to the softAP mode. The mobile phone enables the scanning function, and discovers the router in the softAP mode by scanning. Then the user starts to configure the router on the mobile phone. For example, the user sets the SSID and the password of the network provided by the router on the mobile phone, and manually enables the dual frequency optimization function of the router. After the user completes the settings, the mobile phone synchronously updates the device configuration file of the router. For example, the mobile phone may write the SSID and the password of the network provided by the router into the device configuration file of the router based on the settings performed by the user, and change defaultValue to 1. Then the phone synchronizes the updated device configuration file of the router to the server, and the server synchronously updates the device configuration file of the router.

S206: The electronic device connects to the network provided by the router and triggers the router to perform a binding operation. For example, the user taps a "bind router" option in the smart home APP, to trigger the router to perform the binding operation.

S207: The router registers with the cloud to complete the binding. The router sends a registration request to the server, to bind the identification information of the router to an account of the smart home APP. After the registration succeeds, the server sends a registration success response to the router.

In this embodiment, the configuration is mainly performed on the router to update the device configuration file of the router, such as writing the foregoing network configuration data into the device configuration file. After completing the configuration of the router, the electronic device may end the operation, such as not connecting to the network provided by the router or triggering the binding of the router. Certainly, the electronic device may connect to the network provided by the router and complete the binding of the router after completing the configuration of the router.

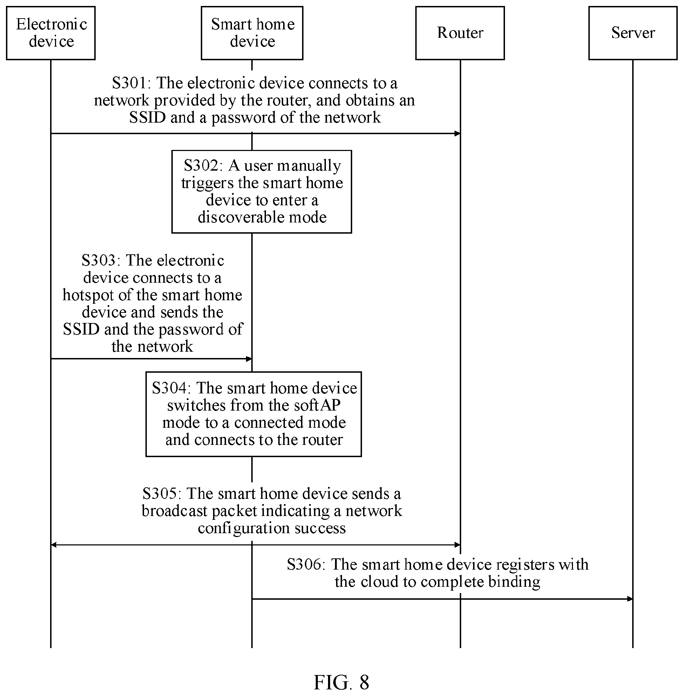

Next, the electronic device may perform network configuration on another smart home device, such as a smart receptacle, a smart toothbrush, and an air conditioner. A schematic signaling diagram is shown in FIG. 8. The process may include the following steps.

S301: The electronic device connects to a network provided by a router, and obtains an SSID and a password of the network. The router may be the router recorded in the foregoing device configuration file. In an example, the electronic device may obtain the SSID and the password from the server or the router. In another example, the electronic device obtains the SSID and the password of the network provided by the router shared by another device. A way of the share is not limited in this embodiment.

S302: The user manually triggers the smart home device to enter the discoverable mode (the SoftAP mode). After the smart home device enters the softAP mode, the smart home device may be used as a hotspot for connection by the electronic device.

S303: The electronic device connects to a hotspot of the smart home device and sends the SSID and the password of the network.

Since the electronic device connects to the hotspot of the smart home device, it indicates that the electronic device discovers the hotspot by scanning. In order to discover the hotspot by scanning, the electronic device needs to connect to the network (as in step S301) to discover the smart home device. After discovering the smart home device as a hotspot, the electronic device switches from being connected to the router to being connected to the hotspot, and then sends the SSID and the password to the smart home device.

S304: The smart home device switches from the softAP mode to a connected mode (an STA mode) and connects to the router after completing the network configuration by using the SSID and the password.

S305: The smart home device sends a broadcast packet indicating a network configuration success. Therefore, the electronic device may determine that the smart home device succeeds in the network configuration.

S306: The smart home device registers with the cloud to complete the binding. The smart home device sends a registration request to the server, to bind identification information of the smart home device to an account of the smart home APP. After the registration succeeds, the server sends a registration success response to the smart home device.

The electronic device may perform network configuration on the smart home device based on a status of "dual frequency optimization" of the router. If dual frequency optimization is enabled, the electronic device directly sends the SSID and the password to the smart home device for network configuration. If dual frequency optimization is disabled, the user manually adjusts the network to which the electronic device is connected. The status of "dual frequency optimization" may be determined based on the field value of the "dual frequency optimization" field in the device configuration file. If the field value of the "dual frequency optimization" field is 1, dual frequency optimization is enabled. If the field value of the "dual frequency optimization" field is 0, dual frequency optimization is disabled.

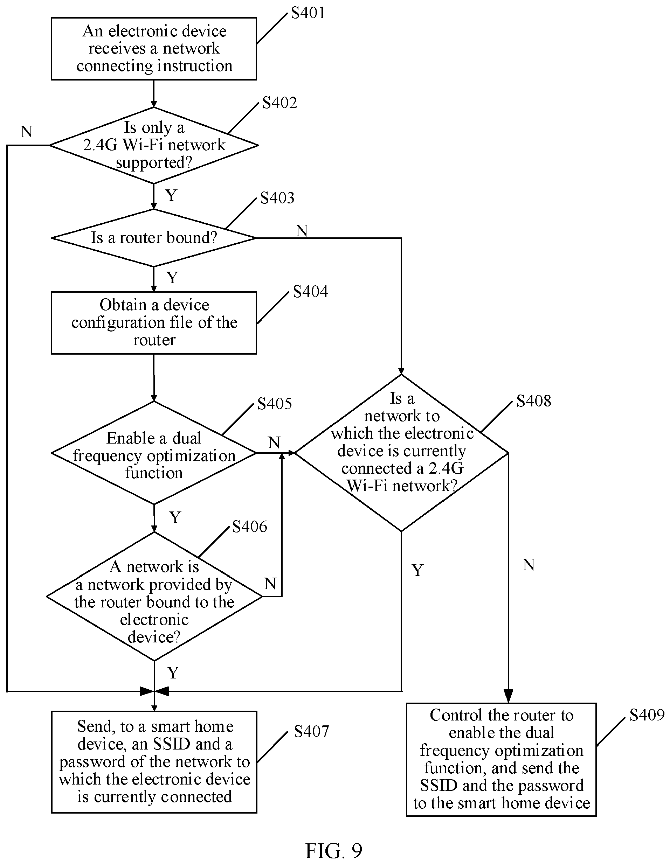

In this embodiment, that the smart home device supports a 2.4G Wi-Fi network and the router may provide a 2.4G Wi-Fi network and a 5G Wi-Fi network is used as an example to illustrate a process in which the electronic device performs network configuration on the smart home device. FIG. 9 shows a process in which the electronic device performs network configuration on the smart home device based on the enable/disable status of "dual frequency optimization" of the router. The process may include the following steps.

S401: The electronic device receives a network connecting instruction. After the smart home APP discovers the smart home device through scanning, the discovered smart home device is displayed on the smart home APP and a "connect" button is also displayed, as shown in FIG. 3. The user taps the "connect" button to trigger a network connecting instruction bound to the "connect" button, so as to instruct the electronic device to perform network configuration on the smart home device.

S402: The electronic device determines, in response to the network connecting instruction, whether the smart home device supports only the 2.4G Wi-Fi network. If so, step S403 is performed. If not, step S408 is performed.

S403: The electronic device determines whether the router is bound to the smart home APP. If so, step S404 is performed. If not, step S408 is performed.

S404: The electronic device obtains the device configuration file of the router.

S405: The electronic device determines whether the router enables the dual frequency optimization function. If so, step S406 is performed. If not, step S408 is performed. The electronic device determines whether the dual frequency optimization function is enabled based on the field value of the "dual frequency optimization" field in the device configuration file. If the field value of the "dual frequency optimization" field is 1, the dual frequency optimization function is enabled. If the field value of the "dual frequency optimization" field is 0, the dual frequency optimization function is disabled.

S406: The electronic device determines whether a network to which the electronic device is connected is the network provided by the router bound to the electronic device. If so, step S407 is performed. If not, step S408 is performed. The electronic device determines, by using the identification information of the router in the device configuration file, whether the network to which the electronic device is connected is the network provided by the router bound to the electronic device. If identification information of a router corresponding to the network to which the electronic device is currently connected is consistent with the identification information of the router in the device configuration file, it indicates that the network to which the electronic device is connected is the network provided by the router bound to the electronic device.

S407: The electronic device sends, to the smart home device, an SSID and a password of the network to which the electronic device is currently connected. After receiving the SSID and the password, the smart home device registers with the configured network.

S408: The electronic device determines whether a network to which the electronic device is currently connected is a 2.4G Wi-Fi network. If so, step S407 is performed. If not, step S409 is performed. The electronic device is connected to the router, and the network to which the electronic device is currently connected is a network to which the router is connected to. In step S103, it is determined whether the network to which the router is connected is a 2.4G Wi-Fi network, to determine whether the network to which the electronic device is currently connected to is a network supported by the smart home device.

S409: The electronic device controls the router to enable the dual frequency optimization function, and sends the SSID and the password to the smart home device.

In this embodiment, the smart home device supports the 2.4G Wi-Fi network. For the smart home device, what matters is that there is a 2.4G Wi-Fi network and the smart home device can obtain an SSID and a password to connect to the 2.4G Wi-Fi network, but it does not matter whether the electronic device is connected to a 2.4G Wi-Fi network or a 5G Wi-Fi network. Therefore, in an example, an alternative to S409 is that the electronic device sends the SSID and the password of the 2.4G Wi-Fi network to the smart home device. The SSID of the 2.4G Wi-Fi network may be the same as or different from an SSID of the 5G Wi-Fi network. In another example, an alternative to S409 may be that the electronic device displays prompt information. For example, "this device supports only 2.4G Wi-Fi, but is now being currently connected to 5G Wi-Fi".

After the user sees the prompt information, the user may select an available 2.4G Wi-Fi network for the electronic device, or the user may disable the dual frequency optimization function of the router and manually connect the electronic device to the 2.4G Wi-Fi network of the router. After the electronic device is manually connected to the 2.4G Wi-Fi network, an SSID and a password of the 2.4G Wi-Fi network may be sent to the smart home device. The smart home device registers with the configured network by using the SSID and the password of the 2.4G Wi-Fi network.

In this embodiment, if the router enables the dual frequency optimization function, the electronic device may directly send the SSID and the password to the smart home device for network configuration. If the router does not enable the dual frequency optimization function, the electronic device may control the router to enable the dual frequency optimization function and send the SSID and the password. Alternatively, if the router does not enable the dual frequency optimization function, the electronic device may send the SSID and the password of the 2.4G Wi-Fi network provided by the router to the smart home device. In this way, a user does not need to manually reselect a network for the electronic device for connection or manually operate the router, reducing user operations.

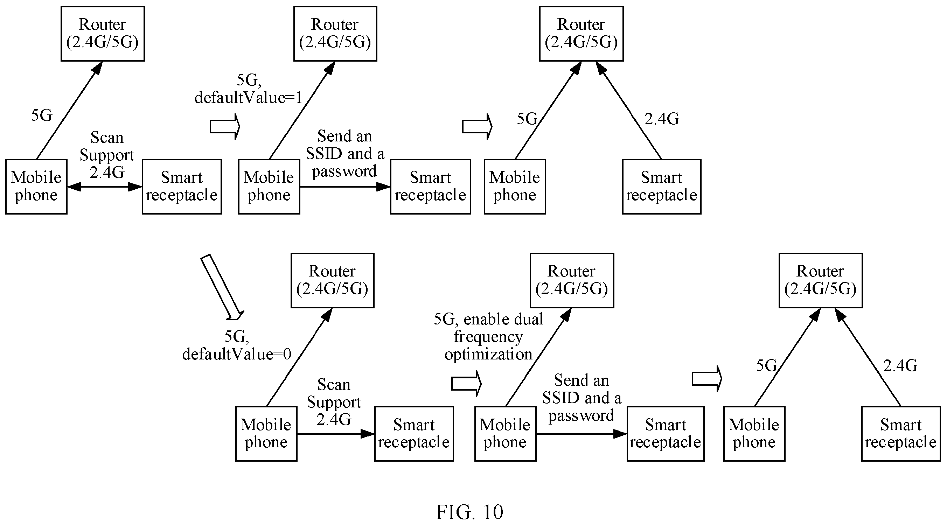

Corresponding to the schematic networking diagram of the process shown in FIG. 9, as shown in FIG. 10, FIG. 10 is a schematic diagram III of networking between devices. In FIG. 10, the mobile phone connects to the 5G Wi-Fi network provided by the router. The smart home APP discovers a smart receptacle by scanning and determines that the smart receptacle supports only a 2.4G Wi-Fi network. The mobile phone finds that defaultValue in the device configuration file of the router is 1, and therefore determines that the router enables dual frequency optimization function, and determines, through the identification information of the router in the device configuration file, that the mobile phone is connected to the network provided by the router in the device configuration file (that is, the network provided by the router bound to the smart home APP). In this case, the mobile phone may send, to the smart receptacle, the SSID and the password of the network to which the mobile phone is currently connected. The mobile phone is connected to the 5G Wi-Fi network, and the smart receptacle is connected to the 2.4G Wi-Fi network.

If defaultValue is 0, the mobile phone determines that the router does not enable the dual frequency optimization function. Regardless of whether the mobile phone is connected to the 2.4G Wi-Fi network or the 5G Wi-Fi network, the mobile phone controls the router to enable the dual frequency optimization function. Then, the mobile phone sends, to the smart receptacle, the SSID and the password of the network to which the mobile phone is currently connected. The mobile phone is connected to the 5G Wi-Fi network, and the smart receptacle is connected to the 2.4G Wi-Fi network.

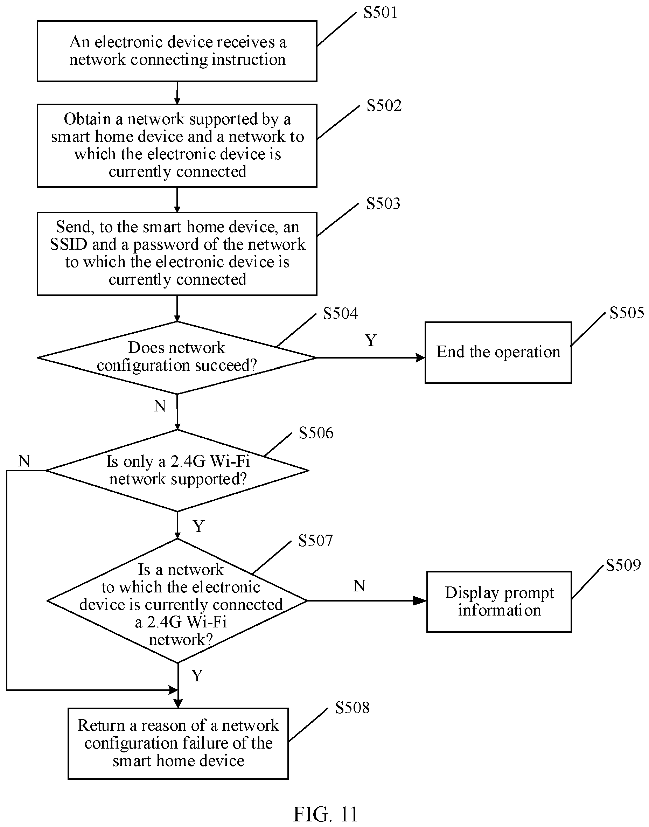

In addition to the network configuration process shown in FIG. 9, another network configuration process provided in this application is FIG. 11. Different from FIG. 9, the electronic device in the network configuration process shown in FIG. 11 does not perform the dual frequency optimization determination and the network connecting determination. The electronic device first sends the SSID and the password, and performs the network connecting determination and determines a reason of a failure if the smart home device fails in the network configuration. The network configuration process shown in FIG. 11 may include the following steps.

S501: The electronic device receives a network connecting instruction. After the smart home APP discovers the smart home device through scanning, the discovered smart home device is displayed on the smart home APP and a "connect" button is also displayed, as shown in FIG. 3. The user taps the "connect" button to trigger a network connecting instruction bound to the "connect" button, so as to instruct the electronic device to perform network configuration on the smart home device.

S502: The electronic device obtains, in response to a network connecting instruction, a network supported by the smart home device and a network to which the electronic device is currently connected. For example, the smart home device supports a 2.4G Wi-Fi network, and the electronic device supports a 2.4G Wi-Fi network and a 5G Wi-Fi network. The electronic device is currently connected to one of the two networks, for example, the 5G Wi-Fi network. In some examples, the electronic device may obtain the network supported by the smart home device after the smart home device fails in the network configuration.

S503: The electronic device sends, to the smart home device, an SSID and a password of the network to which the electronic device is currently connected. The smart home device performs network configuration by using the SSID and the password.

In some examples, the electronic device may send, to the smart home device, SSIDs and passwords of all networks to which the electronic device was connected. In some examples, the electronic device may send, to the smart home device, SSIDs and passwords of some of networks to which the electronic device was connected. In some examples, the electronic device may send, to the smart home device, SSIDs and passwords of available networks near the electronic device. All of the networks to which the electronic device was connected and the available networks may be wireless networks.

S504: The electronic device determines whether the smart home device succeeds in the network configuration. If so, step S505 of ending the operation is performed. If not, step S506 is performed. If the smart home device succeeds in the network configuration, the smart home device sends a broadcast packet indicating the network configuration success. If the electronic device does not receive the broadcast packet indicating the network configuration success, the electronic device determines that the smart home device fails in the network configuration.

S505: The electronic device ends the operation.

S506: The electronic device determines whether the smart home device supports only the 2.4G Wi-Fi network. If so, step S507 is performed. If not, step S508 is performed.

S507: The electronic device determines whether a network to which the electronic device is currently connected is a 2.4G Wi-Fi network. If so, step S508 is performed. If not, step S509 is performed.

S508: The electronic device returns a reason of the network configuration failure of the smart home device and ends the operation. The reason of the network configuration failure is that the smart home device supports only the 2.4G Wi-Fi network but the electronic device is currently connected to a network other than the 2.4G Wi-Fi network.

S509: The electronic device displays prompt information. For example, "this device supports only 2.4G Wi-Fi, but is now being currently connected to 5G Wi-Fi", and ends the operation.

After the user sees the prompt information, the user may select an available 2.4G Wi-Fi network for the electronic device, or the user may disable the dual frequency optimization function of the router and manually connect the electronic device to the 2.4G Wi-Fi network of the router. After the electronic device is manually connected to the 2.4G Wi-Fi network, an SSID and a password of the 2.4G Wi-Fi network may be sent to the smart home device. The smart home device registers with the configured network by using the SSID and the password of the 2.4G Wi-Fi network.

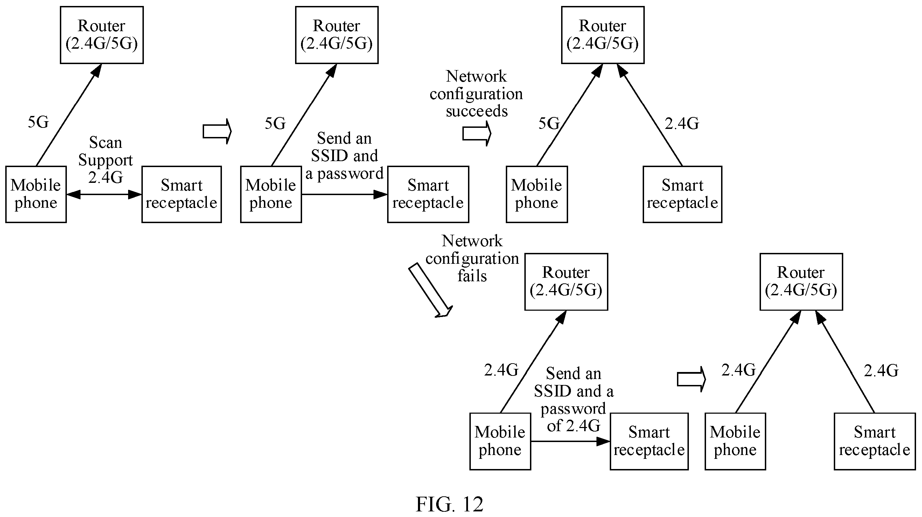

Corresponding to the schematic networking diagram of the process shown in FIG. 11, as shown in FIG. 12, FIG. 12 is a schematic diagram III of networking between devices. In FIG. 12, the mobile phone connects to the 5G Wi-Fi network provided by the router. The mobile phone sends an SSID and a password of the network to the smart receptacle, for example, sends, to the smart receptacle, an SSID and a password of the network to which the mobile phone is currently connected, SSIDs and passwords of all networks to which the mobile phone was connected, or an SSID and a password of a nearby available network. The smart receptacle attempts network configuration by using the SSID and the password. When the network configuration succeeds, the mobile phone is connected to the 5G Wi-Fi network, and the smart receptacle is connected the 2.4G Wi-Fi network.

When the network configuration fails, if the smart receptacle is connected to only the 2.4G Wi-Fi network and the mobile phone is currently connected to only the 2.4G Wi-Fi network, a cause for the network configuration failure is returned. If the smart receptacle is connected to only the 2.4G Wi-Fi network, but the mobile phone is currently not connected to the 2.4G Wi-Fi network, the user manually switches the network provided by the router from the 5G Wi-Fi network to the 2.4G Wi-Fi network. Then the mobile phone sends an SSID and a password of the 2.4G Wi-Fi network to the smart receptacle. The smart receptacle connects to the 2.4G Wi-Fi network by using the SSID and the password of the 2.4G Wi-Fi network, and the mobile phone is also connected to the 2.4G Wi-Fi network.

In this embodiment, the electronic device sends an SSID and a password of an available network to the smart home device, for example, sends, to the smart home device, an SSID and a password of a network to which the electronic device is currently connected, SSIDs and passwords of all networks to which the electronic device was connected, SSIDs and passwords of some of networks connected to which the electronic device was connected, or an SSID and a password of a nearby available network. The smart home device attempts network configuration by using the received SSIDs and passwords. If the network configuration succeeds, user operations are reduced.

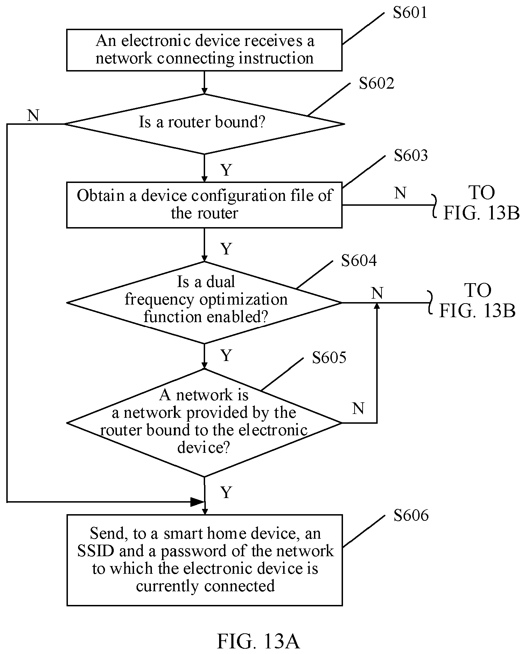

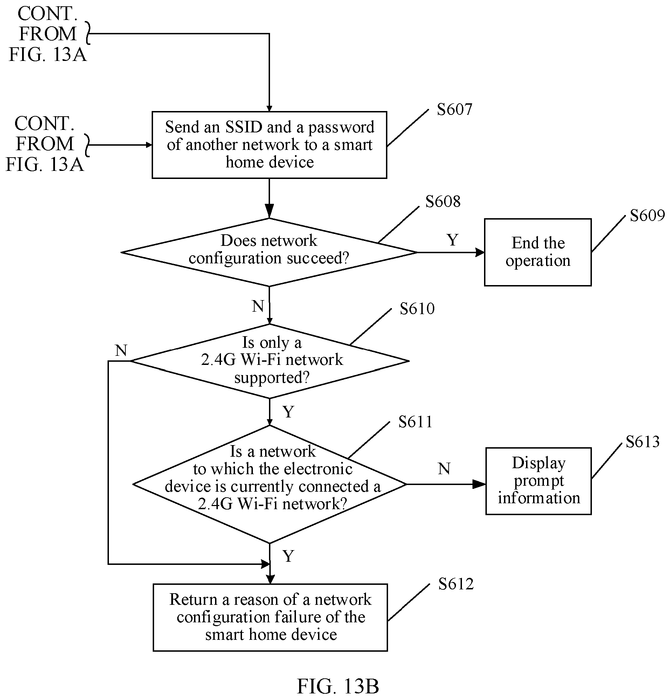

In this embodiment, the electronic device may combine the network configuration processes shown in FIG. 9 and FIG. 11. For example, the electronic device first performs determination on the dual frequency optimization function. If the dual frequency optimization function is not enabled, an SSID and a password of another network are sent to the smart home device. For example, an SSID and a password of a network other than the network to which the electronic device is currently connected, an SSID and a password of another network to which the electronic device was connected, and an SSID and a password of another available network near the electronic device are sent to the smart home device. The smart home device attempts network configuration by using the received SSID and password. If the network configuration fails, an optional process of determining the connection between smart home device and the electronic device is shown in FIG. 13A and FIG. 13B. For specific steps, refer to FIG. 9 and FIG. 11, and details are not described herein.

It should be noted herein that the "supporting only the 2.4G Wi-Fi network" determination step in FIG. 4, FIG. 9, FIG. 11, FIG. 13A, and FIG. 13B is an optional step. If the electronic device discovers the smart home device by scanning, the electronic device determines whether the network to which the electronic device is currently connected is the 2.4G Wi-Fi network, which eliminates the determination of whether the smart home device supports only the 2.4G Wi-Fi network.

Some embodiments of this application further provide an electronic device. The electronic device may include one or more processors and a memory. The memory is configured to store a computer program code. The computer program code includes computer instructions. When the computer instructions are executed by the one or more processors, the electronic device performs related method steps in FIG. 6 to FIG. 13B to implement the network configuration method in the foregoing embodiments.

In embodiments of this application, the electronic device may be divided into functional modules based on the foregoing method examples. For example, each functional module may be obtained through division for each corresponding function, or two or more functions may be integrated into one processing module. The integrated module may be implemented in a form of hardware, or may be implemented in a form of a software function module. It should be noted that the module division in embodiments of this application is an example, and is merely logical function division. There may be another division manner in an actual implementation.

When function modules are divided corresponding to various functions, the network configuration apparatus may be an electronic device or an apparatus that supports the electronic device to implement the method provided in the embodiments. For example, the network configuration apparatus may include a processing unit and a storage unit. The storage unit is configured to store one or more programs. The processing unit is configured to execute the one or more programs. The one or more programs include instructions, and the instructions are used to perform the foregoing network configuration method. The processing unit and the storage unit may be two functional units in the processor of the electronic device. The storage unit in the processor stores the programs, and the processing unit in the processor executes the programs to implement the related method steps in FIG. 6 to FIG. 13B, so as to implement the network configuration method in the foregoing embodiments.

It should be noted that all related content of the steps in the foregoing method embodiments may be cited as functional description of the corresponding function modules. Details are not described herein.

An embodiment further provides a computer-readable storage medium. The computer-readable storage medium stores computer instructions. When the computer instructions are run on an electronic device, the electronic device is caused to perform the related method steps in FIG. 6 to FIG. 13B, so as to implement the network configuration method in the foregoing embodiments.

An embodiment further provides a computer program product including instructions. When the computer program product is run on an electronic device, the electronic device is caused to perform the related method steps in FIG. 6 to FIG. 13B, so as to implement the network configuration method in the foregoing embodiments.

An embodiment further provides a control device. The control device includes one or more processors and a memory. The memory is configured to store one or more computer program codes. The computer program codes include computer instructions. When the one or more processors execute the computer instructions, the control device performs the related method steps in FIG. 6 to FIG. 13B, so as to implement the network configuration method in the foregoing embodiments. The control device may be an integrated circuit IC, or may be a system-on-chip SOC. The integrated circuit may be a general-purpose integrated circuit, or may be a field programmable gate array FPGA, or may be an application-specific integrated circuit ASIC.

It may be clearly learned by a person skilled in the art from the foregoing descriptions of the implementations that, for convenience and brevity of description, division into only the foregoing function modules is used as an example for description. In actual application, the foregoing functions may be allocated to different function modules for implementation according to a requirement, that is, an internal structure of an apparatus is divided into different function modules, to complete all or some of the functions described above. For a specific working process of the system, apparatus, and unit described above, refer to a corresponding process in the foregoing method embodiments, and the details are not described herein.

In the plurality of embodiments provided in this embodiment, it should be understood that the disclosed system, apparatus, and method may be implemented in another manner. For example, the described apparatus embodiment is merely an example. For example, division into the units is merely logical function division and may be another division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or another form.

The units described as separate components may or may not be physically separate, and components displayed as units may or may not be physical units, and may be at one position, or may be distributed on a plurality of network units. Some or all of the units may be selected according to actual needs to achieve the objectives of the solutions of the embodiments.

In addition, functional units in embodiments of this embodiment may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software function unit and sold or used as an independent product, the integrated unit may be stored in a computer-readable storage medium. Based on such an understanding, the technical solutions of the embodiments essentially, or the part contributing to the related art, or all or some of the technical solutions may be implemented in the form of a software product. The computer software product is stored in a storage medium and includes a plurality of instructions for instructing a computer device (which may be a personal computer, a server, a network device, or the like) or a processor to perform all or some of the steps of the methods described in the embodiments. The storage medium includes any medium that can store program code, such as a flash memory, a removable hard disk, a read-only memory, a random access memory, a magnetic disc, or a compact disc.

The foregoing descriptions are merely specific embodiments of this application, and are not intended to limit the protection scope of this application. Any variation or replacement made within the technical scope disclosed in this application shall fall within the protection scope of this application, as long as it falls within the scope of the appended claims. Therefore, the protection scope of this application shall be subject to the protection scope of the claims.

## Claims

1. A network configuration method, applicable to a first electronic device, wherein the first electronic device is connected to a 5G wireless fidelity, Wi-Fi, network of a router, and the method comprises:
discovering a second electronic device by scanning, wherein the second electronic device supports a 2.4G Wi-Fi network; and
sending to the second electronic device, a service set identifier and a password of the
wireless network to which the first electronic device is currently connected if service set identifiers and passwords of the 5G Wi-Fi network and a 2.4G Wi-Fi network of the router are the same;
wherein the sending comprises
obtaining a device configuration file of the router; and
sending to the second electronic device, the service set identifier and the password of the wireless network to which the first electronic device is currently connected if a field value corresponding to a first function is extracted from the device configuration file of the router, wherein the first function represents that the service set identifiers and the passwords of the 5G Wi-Fi network and the 2.4G Wi-Fi network of the router are the same, and the first electronic device is allowed to be connected to the 5G Wi-Fi network or the 2.4G Wi-Fi network when the first function is enabled;
wherein the first function is a dual frequency optimization function or a dual frequency integration function.

2. The method according to claim 1, wherein when the field value corresponding to the first function is a target value, it is determined that the router enables the first function.

3. The method according to claim 1, further comprising:
controlling the router to enable the first function if the router does not enable the first function.

4. An electronic device, comprising: one or more processors and a memory, wherein the memory is configured to store a computer program code, the computer program code comprises computer instructions, and when the one or more processors execute the computer instructions, the electronic device performs the network configuration method according to any one of claims 1 to 3.

5. A computer storage medium, comprising computer instructions, wherein when the computer instructions are run on an electronic device, the electronic device is caused to perform the network configuration method according to any one of claims 1 to 3.

## Patentansprüche

1. Ein Netzwerk-Konfigurationsverfahren, anwendbar auf ein erstes elektronisches Gerät, wobei das erste elektronische Gerät mit einem 5G-Wireless-Fidelity-Wi-Fi-Netzwerk eines Routers verbunden ist, und das Verfahren umfasst:
Entdecken eines zweiten elektronischen Geräts durch Scannen, wobei das zweite elektronische Gerät ein 2.4G-Wi-Fi-Netzwerk unterstützt; und
Senden einer Service-Set-Kennung und eines Passworts des drahtlosen Netzwerks, mit dem das erste elektronische Gerät derzeit verbunden ist, an das zweite elektronische Gerät, wenn die Service-Set-Kennungen und Passwörter des 5G-Wi-Fi-Netzwerks und eines 2.4G-Wi-Fi-Netzwerks des Routers identisch sind;
wobei das Senden umfasst:
Abrufen einer Geräte-Konfigurationsdatei des Routers; und
Senden einer Service-Set-Kennung und eines Passworts des drahtlosen Netzwerks, mit dem das erste elektronische Gerät derzeit verbunden ist, an das zweite elektronische Gerät, wenn ein Feldwert, der einer ersten Funktion entspricht, aus der Geräte-Konfigurationsdatei des Routers extrahiert wird, wobei die erste Funktion darstellt, dass die Service-Set-Kennungen und Passwörter des 5G-Wi-Fi-Netzwerks und des 2.4G-Wi-Fi-Netzwerks des Routers identisch sind, und das erste elektronische Gerät mit dem 5G-Wi-Fi-Netzwerk oder dem 2.4G-Wi-Fi-Netzwerk verbunden werden darf, wenn die erste Funktion aktiviert ist;
wobei die erste Funktion eine Dual-Frequenz-Optimierungsfunktion oder eine Dual-Frequenz-Integrationsfunktion ist.

2. Das Verfahren nach Anspruch 1, wobei, wenn der Feldwert, der der ersten Funktion entspricht, ein Zielwert ist, festgestellt wird, dass der Router die erste Funktion aktiviert.

3. Das Verfahren nach Anspruch 1, ferner umfassend:
Steuern des Routers zur Aktivierung der ersten Funktion, wenn der Router die erste Funktion nicht aktiviert.

4. Ein elektronisches Gerät, umfassend: einen oder mehrere Prozessoren und einen Speicher, wobei der Speicher konfiguriert ist, einen Computerprogrammcode zu speichern, der Computerprogrammcode Computeranweisungen umfasst, und wenn die einen oder mehrere Prozessoren die Computeranweisungen ausführen, führt das elektronische Gerät das Netzwerk-Konfigurationsverfahren gemäß einem der Ansprüche 1 bis 3 aus.

5. Ein Computer-Speichermedium, umfassend Computeranweisungen, wobei, wenn die Computeranweisungen auf einem elektronischen Gerät ausgeführt werden, das elektronische Gerät veranlasst wird, das Netzwerk-Konfigurationsverfahren gemäß einem der Ansprüche 1 bis 3 auszuführen.

## Revendications

1. Un procédé de configuration de réseau, applicable à un premier dispositif électronique, dans lequel le premier dispositif électronique est connecté à un réseau de fidélité sans fil 5G, Wi-Fi, d'un routeur, et le procédé comprend :
la découverte d'un second dispositif électronique par balayage, dans lequel le second dispositif électronique prend en charge un réseau Wi-Fi 2.4G ; et
l'envoi, au second dispositif électronique, d'un identifiant de réseau de service et d'un mot de passe du réseau sans fil auquel le premier dispositif électronique est actuellement connecté si les identifiants de réseau de service et les mots de passe du réseau Wi-Fi 5G et du réseau Wi-Fi 2.4G du routeur sont identiques ;
dans lequel l'envoi comprend :
l'obtention d'un fichier de configuration de dispositif du routeur ; et
l'envoi, au second dispositif électronique, de l'identifiant de réseau de service et du mot de passe du réseau sans fil auquel le premier dispositif électronique est actuellement connecté si une valeur de champ correspondant à une première fonction est extraite du fichier de configuration de dispositif du routeur, dans lequel la première fonction représente que les identifiants de réseau de service et les mots de passe du réseau Wi-Fi 5G et du réseau Wi-Fi 2.4G du routeur sont identiques, et le premier dispositif électronique est autorisé à être connecté au réseau Wi-Fi 5G ou au réseau Wi-Fi 2.4G lorsque la première fonction est activée ;
dans lequel la première fonction est une fonction d'optimisation de double fréquence ou une fonction d'intégration de double fréquence.

2. Le procédé selon la revendication 1, dans lequel lorsque la valeur de champ correspondant à la première fonction est une valeur cible, il est déterminé que le routeur active la première fonction.

3. Le procédé selon la revendication 1, comprenant en outre :
le contrôle du routeur pour activer la première fonction si le routeur n'active pas la première fonction.

4. Un dispositif électronique, comprenant : un ou plusieurs processeurs et une mémoire, dans laquelle la mémoire est configurée pour stocker un code de programme informatique, le code de programme informatique comprend des instructions informatiques, et lorsque le ou les processeurs exécutent les instructions informatiques, le dispositif électronique exécute le procédé de configuration de réseau selon l'une quelconque des revendications 1 à 3.

5. Un support de stockage informatique, comprenant des instructions informatiques, dans lequel lorsque les instructions informatiques sont exécutées sur un dispositif électronique, le dispositif électronique est amené à exécuter le procédé de configuration de réseau selon l'une quelconque des revendications 1 à 3.
